# EUROPÄISCHE PATENTSCHRIFT

(11) **EP 1 941 150 B1**
(45) Veröffentlichungstag und Bekanntmachung des Hinweises auf die Patenterteilung: **30.06.2010**
(21) Anmeldenummer: 06805810.6
(22) Anmeldetag: 22.09.2006
(51) Int. Cl.: F02M 35/10, F16L 11/11, B29C 45/16, B29C 45/14

(54) **IM SPRITZGIESSVERFAHREN HERGESTELLTER SCHLAUCH FÜR DIE FÜHRUNG VON GASEN ZWISCHEN LUFTFILTER UND TURBOLADER EINES FAHRZEUGS**
HOSE PRODUCED BY THE INJECTION-MOULDING PROCESS FOR CONDUCTING GASES BETWEEN AN AIR FILTER AND A TURBOCHARGER OF A VEHICLE
TUBE FLEXIBLE FABRIQUE PAR MOULAGE PAR INJECTION DESTINE A CONDUIRE DES GAZ ENTRE LE FILTRE A AIR ET LE TURBOCOMPRESSEUR D'UN VEHICULE

(30) Priorität: 19.10.2005 DE 102005050442; 29.10.2005 DE 102005051946
(43) Veröffentlichungstag der Anmeldung: 09.07.2008
(73) Patentinhaber: ContiTech MGW GmbH, 34346 Hannoversch-Münden (DE)
(72) Erfinder: DANNENBERG, Wolfgang, 34346 Hannoversch-Münden (DE)
(74) Vertreter: Finger, Karsten
(86) Internationale Anmeldenummer: PCT/EP2006/009225
(87) Internationale Veröffentlichungsnummer: WO 2007/045322

(56) Entgegenhaltungen:
- EP-A2- 1 233 224
- WO-A-02/073057
- WO-A-2004/104438
- WO-A-2006/063670
- DE-A1- 19 630 577
- DE-C1- 4 411 123
- DE-U1-202004 020 354
- US-A- 5 682 924
- US-A- 6 135 158

## Beschreibung

Die vorliegende Erfindung betrifft einen im Spritzgießverfahren hergestellten Schlauch für die Führung von Gasen zwischen Luftfilter und Turbolader eines Fahrzeugs. Ein derartiger Schlauch ist bekannt aus der US 5 682 924 A und der US 6 135 158 A.

Diese Schläuche verbinden den karosserieseitigen und somit fest montierten Luftfilter mit dem Motor, der sich in seinen Lagern bewegen kann. Die Schläuche sorgen für eine mechanische Entkoppelung und müssen daher flexibel sein.

Bei diesen Schläuchen zwischen Luftfilter und Turbolader handelt es sich um sogenannte Reinluftschläuche, da durch diese Schläuche im Wesentlichen keine Feststoffpartikel, wie z. B. Stäube, mehr geführt werden, da durch den Luftfilter derartige Stäube ausgefiltert werden. Allerdings kann die Kurbelgehäuseentlüftung an derartige Schläuche angeschlossen sein. Hierüber werden ölhaltige Gase dem Turbolader zugeführt.

Im Bereich des Anschlussstutzens des Turboladers für den Schlauch herrscht eine Temperatur zwischen 150° und 180°C. Im Bereich des Anschlussstutzens des Luftfilters für den Schlauch liegt die Temperatur im Bereich von zirka 50° bis 60° C. Das heißt, dass der Schlauch zwischen Turbolader und Luftfilter zumindest auf einer Seite in der Lage sein muss, Temperaturen von bis zu 180° C Stand zu halten.

Darüber hinaus besteht das Problem, dass in dem Ansaugschlauch zwischen Luftfilter und Turbolader, insbesondere bei maximaler Drehzahl des Turboladers, ein nicht unerheblicher Unterdruck von bis zu 180 mbar herrscht. Auf Grund dieses Unterdruckes deformiert sich der elastische Schlauch, und es findet eine Querschnittsreduzierung durch Einschnürung des Schlauches statt.

Gängige Spezifikationen der Fahrzeugindustrie fordern, dass die Einschnürung z. B. nicht mehr als 12 % des Strömungsdurchmessers betragen darf. Die physikalischen und die chemischen Anforderungen, die an einen derartigen Schlauch gestellt werden, sind demzufolge sehr hoch, so dass auch nur der Einsatz von sehr hochwertigen Materialien zur Herstellung derartiger Schläuche in Frage kommt. Insbesondere ist bekannt, derartige Schläuche aus AEM herzustellen, da solcher Art hergestellte Schläuche insbesondere auch ölsbeständig sind. Es gibt noch eine ganze Reihe von Stoffen, die wie AEM in der Lage sind, den gestellten Anforderungen zu genügen, wie z. B. ACM, ECO, CR, CM; allerdings sind auch diese relativ teuer. Darüber hinaus ist festzustellen, dass eine Vielzahl dieser Stoffe, und hier ist insbesondere AEM zu nennen, in physikalischer Hinsicht nicht in der Lage sind, die gestellten Anforderungen auch über den gesamten Temperaturbereich zu erfüllen, da diese elastomeren Stoffe relativ weich sind. Insofern ist es häufig so, dass beispielsweise geeigneten Verrippungen vorgesehen sind, um die erforderliche Steifigkeit gegen Einschnürung bereitzustellen. Es sind in diesem Zusammenhang Schläuche als Verbindung zwischen Turbolader und Luftfilter bekannt, die ein definiertes Design in Form einer Kombination aus Falten und Verrippungen aufweisen, nur um insbesondere die physikalischen, d. h. insbesondere die mechanischen Eigenschaften zu erfüllen, die an einen derartigen Schlauch hinsichtlich der Flexibilität, aber auch Steifigkeit in radialer Richtung gestellt werden.

Das heißt, die Problematik besteht darin, dass an einen solchen Schlauch zwischen Turbolader und Luftfilter über die Länge unterschiedliche Anforderungen an die physikalischen und chemischen Eigenschaften gestellt werden.

Die der Erfindung zu Grunde liegende Aufgabe besteht also darin, einen Schlauch der eingangs genannten Art herzustellen, der im Spritzgießverfahren herstellbar ist, und der auf Grund seiner Materialeigenschaften in der Lage ist, die an einen solchen Schlauch über die Länge gestellten unterschiedlichen Anforderungen hinsichtlich seiner physikalischen, und hier insbesondere mechanischen, aber auch chemischen Eigenschaften zu erfüllen.

Ein solcher Schlauch zeichnet sich erfindungsgemäß durch die Merkmale des Anspruchs 1 aus. Durch die Verwendung unterschiedlicher Gummiwerkstoffe, d. h. von Gummiwerkstoffen mit unterschiedlicher Kautschukbasis wird erreicht, dass dem Schlauch über seine Länge gesehen, entsprechend den physikalischen und auch chemischen Anforderungen, die erforderlichen Eigenschaften zu Teil werden können. So sind insbesondere Werkstoffkombinationen denkbar, wie z. B. ECO und AEM bzw. EPDM und ECO, NBR und ECO bzw. auch EPDM und AEM.

Weitere vorteilhafte Merkmale sind den Unteransprüchen zu entnehmen.

So ist insbesondere vorgesehen, dass die dem Turbolader unmittelbar benachbarte Zone des Schlauches einen Gummiwerkstoff aufweist, der gegenüber dem Gummiwerkstoff einer mindestens einen anderen Zone eine erhöhte Festigkeit und erhöhte Temperaturbeständigkeit aufweist. Das heißt nichts anderes, als das die Zone des Schlauches, die unmittelbar am Turbolader befestigt ist, selbst hochtemperaturfest sein muss, da der Turbolader selbst Temperaturen von bis zu 180° C aufweist; darüber hinaus muss dieser Bereich aber auch in gewissem Umfang formstabil sein, da - wie bereits an anderer Stelle erläutert - auf Grund des Unterdruckes im Schlauch der Schlauch das Bestreben hat, sich zusammenzuziehen. Im benachbarten Bereich des Schlauches, also der kühleren Zone, die unmittelbar an den Luftfilter anschließt, kann eine erhöhte Flexibilität erforderlich sein; um das unterschiedliche Schwingungsverhalten und die Relativbewegung zwischen Luftfilter einerseits und Turbolader andererseits kompensieren zu können. Das heißt, in diesem Bereich muss der Schlauch eine gewisse Elastizität aufweisen. Gleichzeitig ist die Stabilität des Schlauches aber so einzustellen, das die Einschnürung des Schlauches einen bestimmten Wert nicht überschreitet. Ein Schlauch, der diese Anforderungen erfüllt, besteht aus zwei Zonen, nämlich z. B. einer ersten Zone aus ECO oder CM, CR und einer zweiten Zone aus AEM, wobei die aus AEM bestehende Zone die ist, die dem Turbolader unmittelbar benachbart ist, denn AEM hat eine höhere Temperaturbeständigkeit als z. B. ECO.

Es hat sich des Weiteren herausgestellt, dass die zu verbindenden Gummiwerkstoffe idealerweise jeweils polare Endgruppen aufweisen sollten. Es besteht allerdings auch die Möglichkeit der Verbindung von Gummiwerkstoffen mit polaren und unpolaren Endgruppen. Eine Kombination von Gummiwerkstoften mit polaren Endgruppen ist beispielsweise eine Kombination der Werkstoffe ECO und AEM, wohingegen eine Kombination zwischen unpolaren und polaren Endgruppen sich als eine.Kombination von EPDM und AEM darstellt.

Die Verbindung der Gummiwerkstoffe mit jeweils unterschiedlicher Kautschukbasis erfolgt durch eine chemische Reaktionen im Rahmen der Vulkanisation.

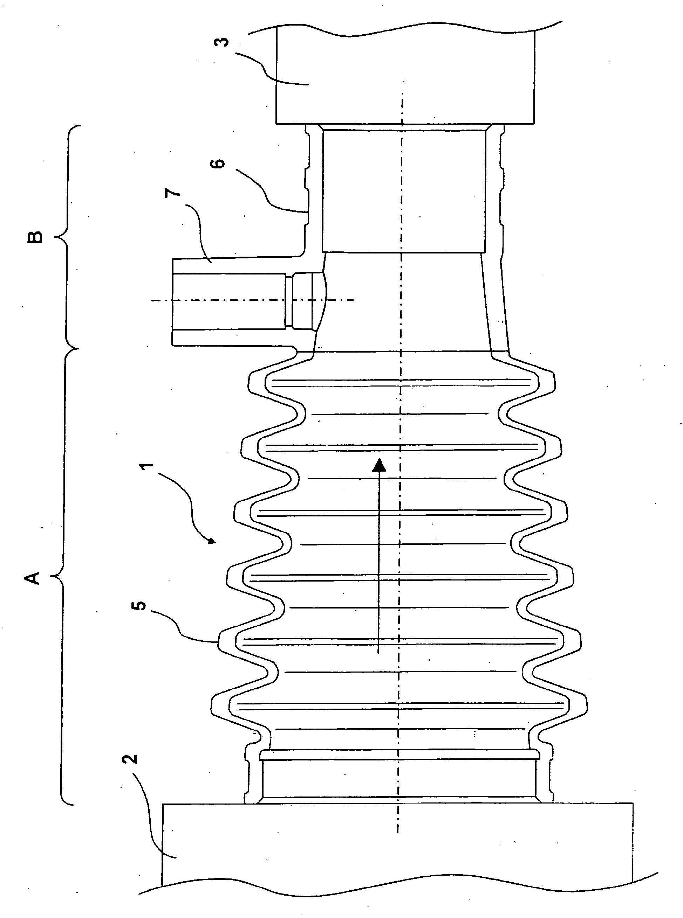

Anhand der Zeichnung wird die Erfindung nachstehend beispielhaft näher erläutert.

Aus der bildlichen Darstellung ergibt sich ein Schlauch 1 zwischen dem Luftfilter 2 und dem Turbolader 3. Der Schlauch 1 weist einen faltenbalgförmigen Mantelabschnitt 5 auf, und einen sich daran anschließenden im Wesentlichen glattzylindrischen Mantel 6, wobei in diesem Bereich ein Einlassstutzen 7 zum Einlass der Gase des Kurbelwellengehäuses vorgesehen ist. Der mit 1 bezeichnete Schlauch besteht nun im Bereich des Abschnittes "A" beispielsweise aus ECO und im Bereich des Abschnittes "B" aus AEM. Es hat sich herausgestellt, dass diese beiden Stoffe im Spritzgießverfahren bei Vulkanisationstemperatur durchaus miteinander zu verbinden sind. Hierbei ist festzuhalten, dass eine solche Verbindung sowohl mit unterschiedlichen Gummistoffen möglich ist, die jeweils polar und unpolar sind, als auch mit solchen Stoffen, die beide polare Endgruppen aufweisen.

## Patentansprüche

1. Im Spritzgießverfahren hergestellter Schlauch (1) für die Führung von Gasen zwischen Luftfilter (2) und Turbolader (3) eines Fahrzeuges, **dadurch gekennzeichnet, dass** der Schlauch (1) in Längsrichtung abschnittsweise Zonen (A, B) aus einem Gummiwerkstoff mit jeweils unterschiedlicher Kautschukbasis aufweist, und zwar derart, dass die dem Turbolader (3) unmittelbar benachbarte Zone (B) des Schlauches einen Gummiwerkstoff aufweist, der sich gegenüber dem Gummiwerkstoff der dem Luftfilter (2) unmittelbar benachbarten Zone (A) durch eine erhöhte Festigkeit und/oder erhöhte Temperaturbeständigkeit auszeichnet, und dass die dem Luftfilter (2) unmittelbar benachbarte Zone (A) des Schlauches einen Gummiwerkstoff mit einer zu dem Gummiwerkstoff der dem Turbolader (3) unmittelbar benachbarten Zone (B) erhöhten Flexibilität aufweist.

2. Im Spritzgießen hergestellter Schlauch nach Anspruch 1, **dadurch gekennzeichnet, dass** die zu verbindenden Werkstoffe jeweils polare Endgruppen aufweisen.

3. Im Spritzgießen hergestellter Schlauch nach Anspruch 1, **dadurch gekennzeichnet, dass** die zu verbindenden Gummiwerkstoffe unpolare und/oder polare Endgruppen aufweisen.

## Claims

1. Hose (1) produced by the injection-moulding process for conducting gases between an air filter (2) and a turbocharger (3) of a vehicle, **characterized in that** the hose (1) has in portions in the longitudinal direction zones (A, B) of a rubber material that are each based on a different crude rubber, to be precise in such a way that the zone (B) of the hose that is directly adjacent to the turbocharger (3) comprises a rubber material which is distinguished by having increased strength and/or increased temperature resistance in comparison with the rubber material of the zone (A) that is directly adjacent to the air filter (2), and **in that** the zone (A) of the hose that is directly adjacent to the air filter (2) comprises a rubber material with increased flexibility in comparison with the rubber material of the zone (B) that is directly adjacent to the turbocharger (3).

2. Hose produced by injection moulding according to Claim 1, **characterized in that** the materials to be joined each have polar end groups.

3. Hose produced by injection moulding according to Claim 1, **characterized in that** the rubber materials to be joined have non-polar and/or polar end groups.

## Revendications

1. Manchon flexible (1) préparé par un procédé de moulage par injection, pour apporter des gaz entre un filtre à air (2) et un turbocompresseur (3) de suralimentation d'un véhicule,
**caractérisé en ce que**
le tuyau flexible (1) présente dans le sens de sa longueur des zones segmentées (A, B) en matériaux à base de caoutchouc qui présentent chacun une base différente de caoutchouc, de telle sorte que la zone (B) du tuyau flexible directement voisine du turbocompresseur (3) présente un matériau à base de caoutchouc qui se distingue du matériau à base de caoutchouc de la zone (A) directement voisine du filtre à air (2) par une résistance mécanique plus élevée et/ou une tenue à des températures plus élevées et
**en ce que** la zone (A) du tuyau flexible directement voisine du filtre à air (2) présente un matériau à base de caoutchouc dont la flexibilité est plus élevée que celle du matériau à base de caoutchouc de la zone (B) directement voisine du turbocompresseur (3) .

2. Tuyau flexible fabriqué par moulage par injection selon la revendication 1, **caractérisé en ce que** les matériaux à relier présentent tous des groupes terminaux polaires.

3. Tuyau flexible fabriqué par moulage par injection selon la revendication 1, **caractérisé en ce que** les matériaux à base de caoutchouc qui doivent être reliés présentent des groupes terminaux non polaires et/ou des groupes terminaux polaires.
